(19) **Europäisches Patentamt European Patent Office Office européen des brevets**

(11) **EP 3 913 200 B1**

(12) **EUROPEAN PATENT SPECIFICATION**

(45) Date of publication and mention of the grant of the patent:
**29.11.2023 Bulletin 2023/48**

(21) Application number: **20759227.0**

(22) Date of filing: **18.02.2020**

(51) International Patent Classification (IPC):
*F02B 39/14* (2006.01)   *F16C 17/02* (2006.01)
*F16C 33/10* (2006.01)   *F16C 35/02* (2006.01)

(52) Cooperative Patent Classification (CPC):
**F16C 35/02; F02B 39/14; F16C 17/02; F16C 33/1045**

(86) International application number:
**PCT/JP2020/006249**

(87) International publication number:
**WO 2020/171057 (27.08.2020 Gazette 2020/35)**

(54) **JOURNAL BEARING STRUCTURE AND SUPERCHARGER EQUIPPED WITH SAME**

GLEITLAGERSTRUKTUR UND DAMIT AUSGERÜSTETER AUFLADER

STRUCTURE DE PALIER LISSE ET COMPRESSEUR DE SURALIMENTATION ÉQUIPÉ DE CETTE DERNIÈRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.02.2019 JP 2019030839**

(43) Date of publication of application:
**24.11.2021 Bulletin 2021/47**

(73) Proprietor: **Mitsubishi Heavy Industries Marine Machinery & Equipment Co., Ltd.**
**Nagasaki-shi**
**Nagasaki 8508610 (JP)**

(72) Inventors:
• **YANO, Yusuke**
  **Nagasaki-shi, Nagasaki 850-6610 (JP)**
• **WADA, Yasuhiro**
  **Nagasaki-shi, Nagasaki 850-8610 (JP)**
• **IWASA, Yukihiro**
  **Nagasaki-shi, Nagasaki 850-8610 (JP)**

(74) Representative: **Hoffmann Eitle**
**Patent- und Rechtsanwälte PartmbB**
**Arabellastraße 30**
**81925 München (DE)**

(56) References cited:
**EP-B1- 3 283 743**      **WO-A1-2018/092781**
**WO-A1-2018/092781**   **JP-A- S63 149 408**
**JP-A- 2001 140 888**    **JP-A- 2001 140 888**
**JP-A- 2010 116 944**    **JP-A- 2010 116 944**
**JP-A- 2013 177 900**    **JP-A- 2013 177 900**
**JP-A- 2016 217 398**    **US-A1- 2016 298 491**
**US-A1- 2017 045 084**

## Description

{Technical Field}

The present invention relates to a journal bearing structure and a turbocharger having the same.

{Background Art}

Conventionally, a journal bearing structure that supports a load in the radial direction of a rotary shaft (radial load) is known (for example, see JP 2018-145942 A). JP 2018-145942 A discloses that a radial load of a rotary shaft provided integrally with a turbine of an exhaust turbine turbocharger is supported by a pair of journal bearing structures.

WO 2018/092781 A1, JP 2010-116944 A, JP 2001-140888 A and JP 2013-177900 A disclose journal bearing structures with floating or semi-floating journal bearings. US 2017/045084 A1 discloses a journal bearing structure with the pre-characterizing features of claim 1, and particularly wherein the bearing is pressed into the bearing housing.

{Technical Problem}

A journal bearing structure is formed of a journal bearing that supports a rotary shaft (bush metal) and a bearing housing, and the journal bearing is pressed into the bearing housing and thereby held by the bearing housing, for example. Further, for example, the journal bearing and the bearing housing are provided with oil supply holes at the same position in the circumferential direction about the axis line of the rotary shaft, respectively, in order to supply a lubricant to a gap between the journal bearing and the rotary shaft. Since the oil supply holes are provided at circumferentially the same position, the lubricant supplied to the oil supply hole of the bearing housing is supplied to the gap between the journal bearing and the rotary shaft via the oil supply hole of the journal bearing.

However, if the rotary shaft and the journal bearing seize each other and thereby the state where the journal bearing is pressed into the bearing housing is released, for example, the circumferential positions of the oil supply hole of the bearing housing and the oil supply hole of the journal bearing will differ from each other. In such a case, the oil supply hole of the bearing housing and the oil supply hole of the journal bearing do not communicate with each other, and the lubricant is no longer supplied to the gap between the journal bearing and the rotary shaft.

{Summary of Invention}

The present invention has been made in view of such circumstances and intends to provide a journal bearing structure that can supply a lubricant to a gap between a journal bearing and a rotary shaft even in a state where the circumferential positions of the oil supply hole of the journal bearing and the oil supply hole of the bearing housing are different from each other.

{Solution to Problem}

To solve the above problem, a journal bearing structure according to claim 1 is provided. The journal bearing structure according to claim 1 includes: a journal bearing that has a first inner circumferential surface and a first outer circumferential surface that are formed in a cylindrical shape extending in an axis line and supports a rotary shaft by the first inner circumferential surface; and a bearing housing that has a second inner circumferential surface formed in a cylindrical shape extending in the axis line and holds the first outer circumferential surface of the journal bearing by the second inner circumferential surface. The journal bearing is pressed into the bearing housing and thereby attached to the bearing housing. The journal bearing has a first oil supply hole through which the first inner circumferential surface and the first outer circumferential surface communicate with each other, the bearing housing has a second oil supply hole opened to the second inner circumferential surface, and an oil supply groove extending in a circumferential direction about the axis line and configured to guide a lubricant discharged from the second oil supply hole to the first oil supply hole is formed in at least one of the second inner circumferential surface of the bearing housing and the first outer circumferential surface of the journal bearing.

The oil supply groove is formed in at least one of the second inner circumferential surface of the bearing housing and the first outer circumferential surface of the journal bearing. Thus, even when a state where the journal bearing is held by the bearing housing is released and the circumferential positions of the first oil supply hole and the second oil supply hole differ from each other, a state where a lubricant discharged from the second oil supply hole is guided to the first oil supply hole is maintained. It is therefore possible to provide a journal bearing structure that can supply a lubricant to a gap between the journal bearing and the rotary shaft even in a state where the circumferential positions of the oil supply hole of the journal bearing and the oil supply hole of the bearing housing are different from each other.

In the journal bearing structure according to one aspect of the present invention, the oil supply groove may be formed in the second inner circumferential surface of the bearing housing. Since the oil supply groove is formed in the bearing housing, it is possible to suppress a reduction in strength due to thinning of the journal bearing.

In the journal bearing structure according to one aspect of the present invention, the oil supply groove may be formed in the first outer circumferential surface of the journal bearing. Since the oil supply groove is formed in the journal bearing, it is possible to facilitate processing of forming the oil supply groove compared to a case where the oil supply groove is formed in the bearing housing.

In the journal bearing structure according to the present invention, the width in the axis line direction of the oil supply groove is smaller than or equal to the width in the axis line direction of the second oil supply hole. If the width in the axis line direction of the oil supply groove is wider than the width in the axis line direction of the second oil supply hole, a region where the second inner circumferential surface of the bearing housing holds the first outer circumferential surface of the journal bearing will decrease, and the force to hold the journal bearing by the bearing housing will decrease. In the journal bearing structure according to the present invention, since the width in the axis line direction of the oil supply groove is less than or equal to the width in the axis line direction of the second oil supply hole, the failure described above can be suppressed.

In the journal bearing structure according to one aspect of the present invention, the oil supply groove may be formed in the whole circumference in the circumferential direction about the axis line. Since the oil supply groove is formed in the whole circumference in the circumferential direction, even when the circumferential positions of the oil supply hole of the bearing housing and the oil supply hole of the journal bearing are in any circumferential positional relationship, a lubricant can be reliably supplied by the oil supply groove from the second oil supply hole to the first oil supply hole.

In the journal bearing structure according to one aspect of the present invention, a first position in the circumferential direction at which the first oil supply hole is arranged and a second position in the circumferential direction at which the second oil supply hole is arranged are positions different from each other. Even when the circumferential positions of the first oil supply hole and the second oil supply hole are different from each other, a lubricant can be supplied from the second oil supply hole to the first oil supply hole via the oil supply groove. Thus, for example, since it is not required to match the circumferential positions of the first oil supply hole and the second oil supply hole to each other when attaching the journal bearing to the bearing housing, this facilitates attachment operation. Further, since a lubricant is supplied via an oil supply groove even when the number of second oil supply holes provided in the bearing housing is less than the number of first oil supply holes provided in the journal bearing, the oil supply system for supplying a lubricant to the bearing housing can be simplified.

{Advantageous Effects of Invention}

According to the present invention, it is possible to provide a journal bearing structure that can supply a lubricant to a gap between a journal bearing and a rotary shaft even in a state where the circumferential positions of an oil supply hole of a journal bearing and an oil supply hole of a bearing housing are different from each other, while ensuring a sufficient contact area between the bearing housing and the journal bearing and reliably maintaining the state where the journal bearing is pressed into and thereby fixed to the bearing housing.

{Brief Description of Drawings}

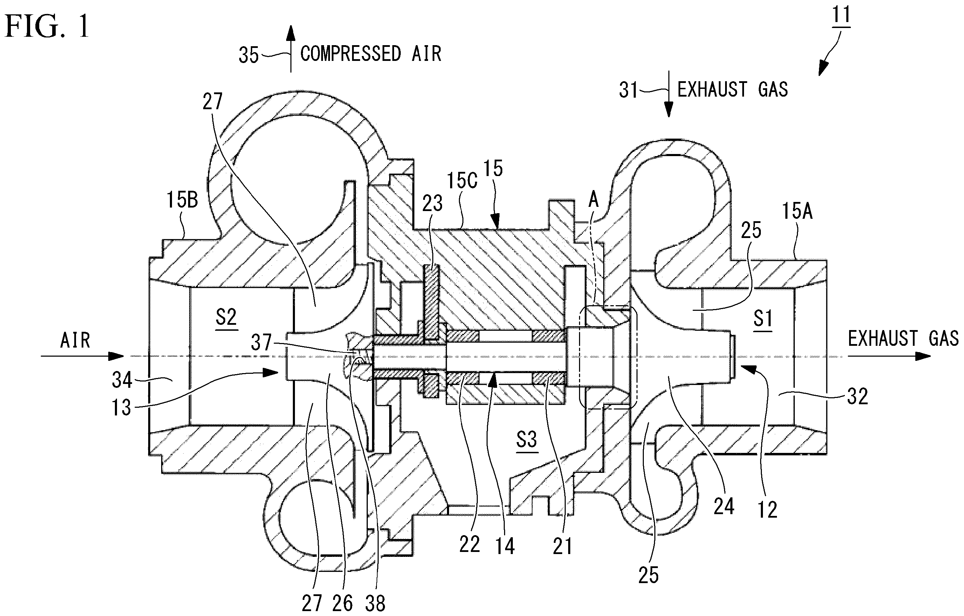

{Fig. 1}
Fig. 1 is a vertical sectional view illustrating a general configuration of an exhaust turbine turbocharger of a first embodiment.
{Fig. 2}
Fig. 2 is a partial enlarged view of a part A illustrated in Fig. 1.
{Fig. 3}
Fig. 3 is a sectional view of a journal bearing structure illustrated in Fig. 2 taken in the direction of the arrow I-I.
{Fig. 4}
Fig. 4 is a partial enlarged view of a part A illustrated in Fig. 1.
{Fig. 5}
Fig. 5 is a sectional view of a journal bearing structure illustrated in Fig. 4 taken in the direction of the arrow II-II.
{Fig. 6}
Fig. 6 is a partial enlarged view of a part A illustrated in Fig. 1.
{Fig. 7}
Fig. 7 is a sectional view of a journal bearing structure illustrated in Fig. 6 taken in the direction of the arrow III-III.
{Fig. 8}
Fig. 8 is a partial enlarged view of a part A illustrated in Fig. 1.
{Fig. 9}
Fig. 9 is a sectional view of a journal bearing structure illustrated in Fig. 8 taken in the direction of the arrow IV-IV.

{Description of Embodiments}

[First Embodiment]

An exhaust turbine turbocharger of the first embodiment of the present invention will be described below with reference to Fig. 1.

As illustrated in Fig. 1, an exhaust turbine turbocharger 11 is formed mainly of a turbine 12, a compressor 13, and a rotary shaft 14, which are accommodated in a housing 15.

The housing 15 has a hollow inside and has a turbine housing 15A forming a first space S1 that accommodates components of the turbine 12, a compressor housing 15B forming a second space S2 that accommodates components of the compressor 13, and a bearing housing 15C forming a third space S3 that accommodates the rotary shaft 14. The third space S3 of the bearing housing 15C is located between the first space S1 of the turbine housing 15A and the second space S2 of the compressor housing 15B.

In the rotary shaft 14, the end on the turbine 12 side is rotatably supported by a journal bearing 21 that is a turbine side bearing, the end on the compressor 13 side is rotatably supported by a journal bearing 22 that is the compressor side bearing, and motion in the axial direction in which the rotary shaft 14 extends is restricted by a thrust bearing 23. In the rotary shaft 14, a turbine wheel 24 of the turbine 12 is fixed to one end in the axial direction.

The turbine wheel 24 is accommodated in the first space S1 of the turbine housing 15A, and a plurality of turbine blades 25 are provided to the outer circumference circumferentially at predetermined intervals. Further, in the rotary shaft 14, an external thread part 37 is formed in the other end in the axial direction and fastened in the screw hole 38 of a compressor impeller 26 of the compressor 13. The compressor impeller 26 is accommodated in the second space S2 of the compressor housing 15B, and a plurality of blades 27 are provided to the outer circumference circumferentially at predetermined intervals.

In the turbine housing 15A, an exhaust gas inlet passage 31 and an exhaust gas outlet passage 32 are provided to the turbine blades 25. Further, the turbine housing 15A can drive and rotate the turbine 12 when an exhaust gas flow flowing in from the inlet passage 31 is guided to the plurality of turbine blades 25. In the compressor housing 15B, an intake port 34 and a compressed air discharge port 35 are provided to the compressor impeller 26. The air compressed by the compressor impeller 26 is discharged to the compressed air discharge port 35.

Thus, in the exhaust turbine turbocharger 11, the turbine 12 is driven by an exhaust gas discharged from an engine (not illustrated), the rotation of the turbine 12 is transmitted to the rotary shaft 14 to drive the compressor 13, and the compressor 13 compresses and supplies a combustion gas to the engine. Therefore, the exhaust gas from the engine passes through the exhaust gas inlet passage 31, an exhaust gas flow is guided to the plurality of turbine blades 25, and thereby, the turbine 12 is driven and rotated via the turbine wheel 24 to which the plurality of turbine blades 25 are fixed.

The exhaust gas that has driven the plurality of turbine blades 25 is then discharged to the outside from the outlet passage 32. On the other hand, when the rotary shaft 14 is rotated by the turbine 12, the integrated compressor impeller 26 is rotated, and air is taken through the intake port 34. The taken air is pressurized by the compressor impeller 26 into compressed air, and this compressed air is supplied from the compressed air discharge port 35 to the engine.

Next, a journal bearing structure 100 of the present embodiment will be described with reference to the drawings. The journal bearing structure 100 of the present embodiment is a bearing structure that supports the rotary shaft 14 and has the journal bearing 21 and the bearing housing 15C. Although the journal bearing 21 will be described below, since the structure of the journal bearing 22 is the same as that of the journal bearing 21, the description thereof will be omitted.

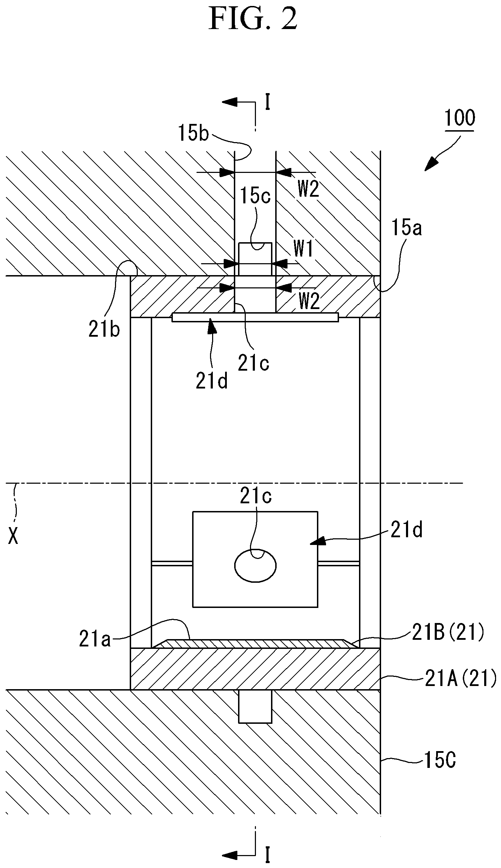

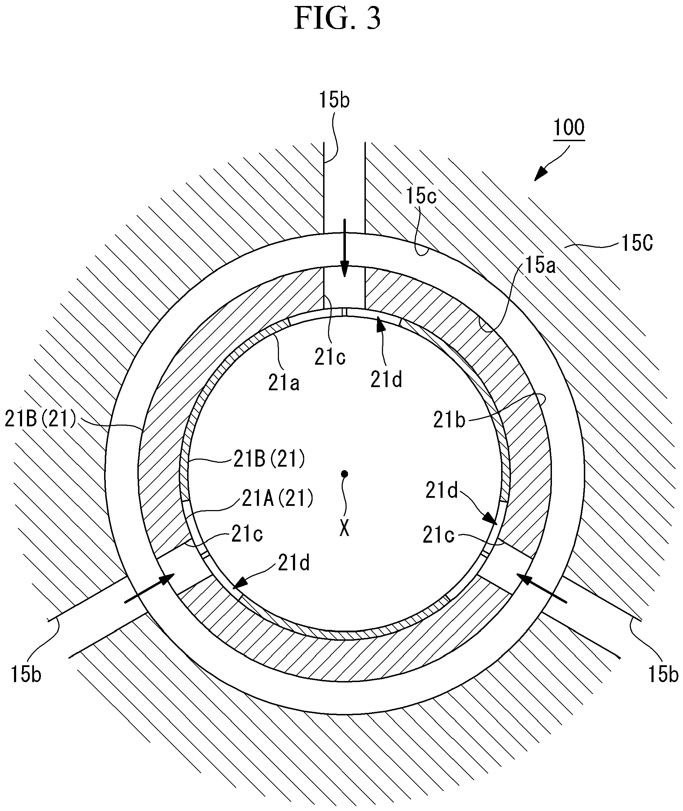

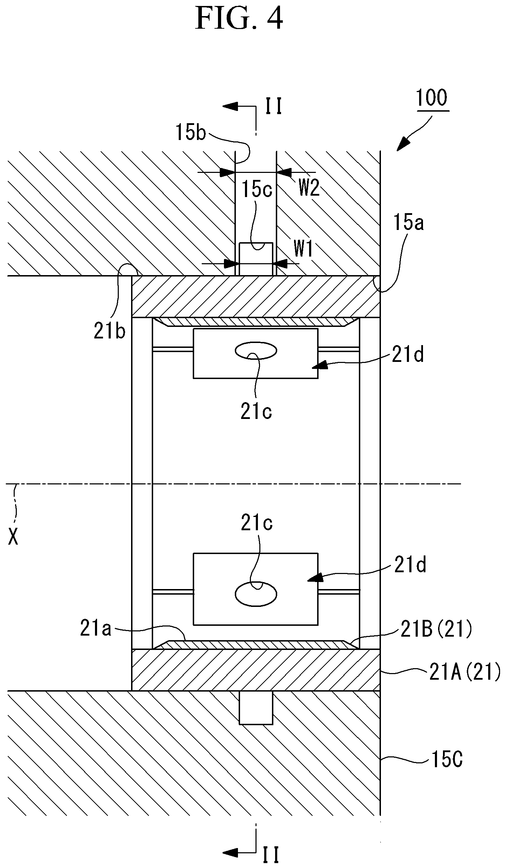

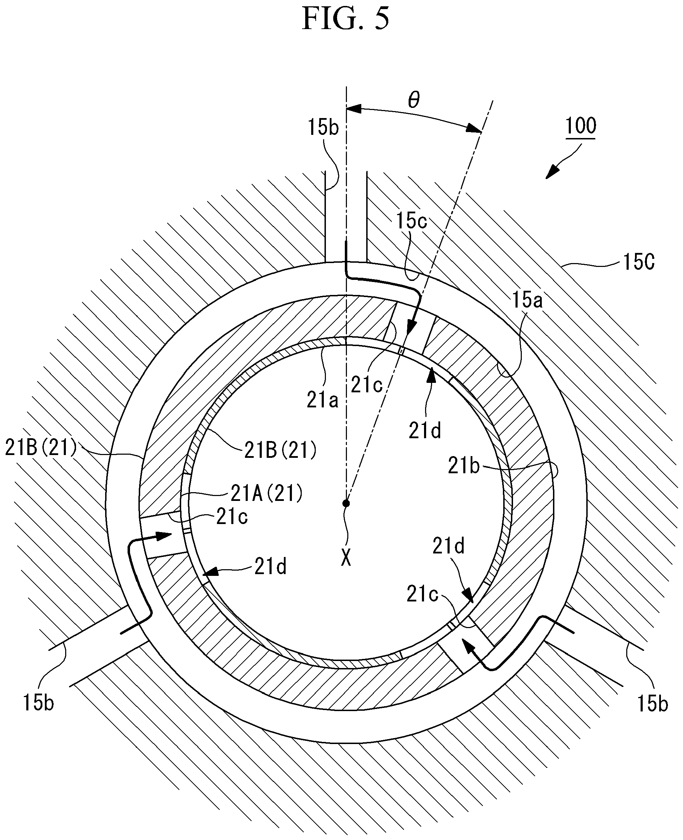

Fig. 2 and Fig. 4 are partial enlarged views of the part A illustrated in Fig. 1 and illustrate the journal bearing structure 100 of the present embodiment. Fig. 3 is a sectional view of the journal bearing structure 100 illustrated in Fig. 2 taken in the direction of the arrow I-I. Fig. 5 is a sectional view of the journal bearing structure 100 illustrated in Fig. 4 taken in the direction of the arrow II-II. In Fig. 2 to Fig. 5, while the axis line X is the center axis of the rotary shaft 14 illustrated in Fig. 1, illustration of the rotary shaft 14 is omitted. The journal bearing structure 100 illustrated in Fig. 2 and Fig. 3 will be mainly described below, and description of components having the same reference in the journal bearing structure 100 illustrated in Fig. 4 and Fig. 5 will be omitted.

The journal bearing structure 100 illustrated in Fig. 2 and Fig. 3 is in a state where the circumferential positions of each oil supply hole 21c of the journal bearing 21 and each oil supply hole 15b of the bearing housing 15C match each other. On the other hand, the journal bearing structure 100 illustrated in Fig. 4 and Fig. 5 is in a state where the circumferential positions of each oil supply hole 21c of the journal bearing 21 and each oil supply hole 15b of the bearing housing 15C are different from each other. The journal bearing structure 100 illustrated in Fig. 2 and Fig. 3 corresponds to an initial state after manufacturing. The journal bearing structure 100 illustrated in Fig. 4 and Fig. 5 corresponds to a state after the rotary shaft 14 and the journal bearing 21 have been seized due to use and thereby the state of the journal bearing 21 pressed into the bearing housing 15C has been at least temporarily released.

As illustrated in Fig. 2 and Fig. 3, the journal bearing 21 is a cylindrical member having an inner circumferential surface (first inner circumferential surface) 21a formed in a cylindrical shape extending in the axis line X and an outer circumferential surface (first outer circumferential surface) 21b formed in a cylindrical shape extending in the axis line X. The journal bearing 21 supports the rotary shaft 14 by the inner circumferential surface 21a. The journal bearing 21 is pressed into the bearing housing 15C and thereby attached to the bearing housing 15C.

The journal bearing 21 has a back metal 21A formed in a cylindrical shape extending in the axis line X and a bearing metal 21B joined to the inside of the back metal 21A. The back metal 21A is formed of a metal material such as iron. The bearing metal 21B is formed of a metal material such as a copper alloy or platinum.

The journal bearing 21 has oil supply holes (first oil supply hole) 21c each extending in the radial direction orthogonal to the axis line X and opened to both the inner circumferential surface 21a and the outer circumferential surface 21b. Each oil supply hole 21c causes the inner circumferential surface 21a and the outer circumferential surface 21b to communicate with each other and is used for supplying a lubricant supplied from the bearing housing 15C to the gap between the inner circumferential surface 21a and the rotary shaft 14. As illustrated in Fig. 3, the journal bearing 21 is provided with three oil supply holes 21c at three positions at intervals of 120 degrees in the circumferential direction about the axis line X. Any number of oil supply holes 21c, such as only one, two at intervals of 180 degrees, or four at intervals of 90 degrees, may be provided.

Recesses 21d in which the bearing metal 21B forming the inner circumferential surface 21a is not provided are formed around the oil supply holes 21c on the inner circumference side of the journal bearing 21. Each recess 21d is a region recessed toward the outer circumferential surface 21b side from the surrounding inner circumferential surface 21a. The lubricant flowing out of the oil supply hole 21c is guided between the inner circumferential surface 21a and the rotary shaft 14 due to rotation of the rotary shaft 14 while a certain amount thereof is held in the recess 21d. With the recess 21d being provided, the lubricant discharged from the oil supply hole 21c can be smoothly guided between the inner circumferential surface 21a and the rotary shaft 14.

As illustrated in Fig. 2 and Fig. 3, the bearing housing 15C is a member that has an inner circumferential surface (second inner circumferential surface) 15a formed in a cylindrical shape extending in the axis line X and holds the outer circumferential surface 21b of the journal bearing 21 by the inner circumferential surface 15a. The outer circumferential surface 21b of the journal bearing 21 is pressed into the inner circumferential surface 15a, and thereby, the bearing housing 15C holds the journal bearing 21.

The bearing housing 15C has oil supply holes (second oil supply hole) 15b and an oil supply groove 15c. Each oil supply hole 15b is a through hole extending in the radial direction orthogonal to the axis line X and opened to the inner circumferential surface 15a. Through the oil supply holes 15b, the lubricant supplied from an oil supply system (not illustrated) provided inside the bearing housing 15C is supplied to the oil supply holes 21c of the journal bearing 21 via the oil supply groove 15c described later.

As illustrated in Fig. 3, the bearing housing 15C is provided with three oil supply holes 15b at three positions at intervals of 120 degrees in the circumferentially direction about the axis line X so as to correspond to the oil supply holes 21c of the journal bearing 21. Any number, which is the same number as that of the oil supply holes 21c, of oil supply holes 15b, such as only one, two at intervals of 180 degrees, or four at intervals of 90 degrees, may be provided.

The oil supply groove 15c is a groove extending in the circumferential direction about the axis line X, formed circumferentially in the whole circumference, and having a depth in the radial direction. The oil supply groove 15c is formed in the inner circumferential surface 15a of the bearing housing 15C and recessed in a direction away from the axis line X. The oil supply groove 15c guides the lubricant discharged from the oil supply holes 15b to the oil supply holes 21c of the journal bearing 21. The oil supply groove 15c of the present embodiment is formed in the inner circumferential surface 15a of the bearing housing 15C and is not formed in the outer circumferential surface 21b of the journal bearing 21. It is thus possible to suppress a reduction in strength due to thinning of the journal bearing 21.

As illustrated in Fig. 2, the width W1 in the axis line X direction of the oil supply groove 15c is substantially the same as the width W2 in the axis line X direction of the oil supply hole 15b. The oil supply hole 15b and the oil supply hole 21c have the same width W2, respectively. Since the oil supply hole 15b is a circular hole in sectional view, the width W2 in the axis line X direction of the oil supply hole 15b matches the diameter of the oil supply hole 15b.

According to the invention, the width W1 and the width W2 have a relationship as expressed by Equation (1) below:

$$W1 \leq W2 \quad (1)$$

The reason why the width W1 of the oil supply groove 15c is smaller than or equal to the width W2 of the oil supply hole 21c is to ensure a sufficient contact area between the bearing housing 15C and the journal bearing 21 and reliably maintain the state where the journal bearing 21 is pressed into and thereby fixed to the bearing housing 15C.

The journal bearing structure 100 illustrated in Fig. 2 and Fig. 3 is in a state where the circumferential positions of the oil supply hole 21c of the journal bearing 21 and the oil supply hole 15b of the bearing housing 15C match each other. The journal bearing structure 100 illustrated in Fig. 2 and Fig. 3 corresponds to the initial state after manufacturing. As illustrated by the arrow in Fig. 3, the lubricant guided from the oil supply holes 15b to the oil supply groove 15c mainly flows radially into the oil supply holes 21c while partially flowing circumferentially along the oil supply groove 15c. This is because the oil supply hole 21c is arranged on the extension line in the inflow direction of the lubricant flowing from the oil supply hole 15b into the oil supply groove 15c and the opening area of the oil supply hole 21c is larger than the opening area of the oil supply groove 15c.

On the other hand, the journal bearing structure 100 illustrated in Fig. 4 and Fig. 5 is in a state where the circumferential positions of the oil supply hole 21c of the journal bearing 21 and the oil supply hole 15b of the bearing housing 15C are different from each other. The journal bearing structure 100 illustrated in Fig. 4 and Fig. 5 corresponds to a state after the rotary shaft 14 and the journal bearing 21 have been seized due to use and thereby the state of the journal bearing 21 pressed into the bearing housing 15C has been at least temporarily released.

As illustrated in Fig. 5, the circumferential positions of the oil supply hole 21c of the journal bearing 21 and the oil supply hole 15b of the bearing housing 15C are positions different from each other by an angle θ about the axis line X. As illustrated in the arrow in Fig. 5, the lubricant guided from the oil supply holes 15b to the oil supply groove 15c flows circumferentially along the oil supply groove 15c and then flows radially into the oil supply holes 21c.

Without the oil supply groove 15c provided in the state illustrated in Fig. 4 and Fig. 5, the end on the inner circumference side of the oil supply hole 15b would be closed by the outer circumferential surface 21b of the journal bearing 21. This would result in a state where no lubricant is supplied from the oil supply holes 15b of the bearing housing 15C to the oil supply holes 21c of the journal bearing 21. To address this, in the bearing housing 15C of the present embodiment provided with the oil supply groove 15c, even when the circumferential positions of the oil supply hole 21c of the journal bearing 21 and the oil supply hole 15b of the bearing housing 15C are different from each other, the lubricant can be supplied from the oil supply holes 15b to the oil supply holes 21c.

The effects and advantages achieved by the journal bearing structure 100 of the present embodiment described above will be described.

According to the journal bearing structure 100 of the present embodiment, the oil supply groove 15c is formed in the inner circumferential surface 15a of the bearing housing 15C. Thus, even when a state where the journal bearing 21 is held by the bearing housing 15C is released and the circumferential positions of the oil supply hole 15b and the oil supply hole 21c differ from each other, a state where a lubricant discharged from the oil supply hole 15b is guided to the oil supply hole 21c is maintained. It is therefore possible to provide the journal bearing structure 100 that can supply the lubricant to a gap between the journal bearing 21 and the rotary shaft 14 even in a state where the circumferential positions of the oil supply hole 21c of the journal bearing 21 and the oil supply hole 15b of the bearing housing 15C are different from each other.

In the journal bearing structure 100 of the present embodiment, the width W1 in the axis line X direction of the oil supply groove 15c is substantially the same as the width W2 in the axis line X direction of the oil supply hole 15b.

If the width W1 in the axis line X direction of the oil supply groove 15c is excessively wider than the width W2 in the axis line X direction of the oil supply hole 15b, a region where the inner circumferential surface 15a of the bearing housing 15C holds the outer circumferential surface 21b of the journal bearing 21 will decrease, and the force to hold the journal bearing 21 by the bearing housing 15C will decrease.

Further, if the width W1 in the axis line X direction of the oil supply groove 15c is excessively narrower than the width W2 in the axis line X direction of the oil supply hole 15b, smooth supply of the lubricant from the oil supply hole 15b to the oil supply groove 15c will not be performed. In the journal bearing structure 100 of the present embodiment, since the widths in the axis line X direction of the oil supply groove 15c and the oil supply hole 15b are substantially the same, the failure described above can be suppressed.

In the journal bearing structure 100 of the present embodiment, the oil supply groove 15c is formed in the whole circumference in the circumferential direction about the axis line X. Since the oil supply groove 15c is formed in the whole circumference in the circumferential direction, even when the circumferential positions of the oil supply hole 15b of the bearing housing 15C and the oil supply hole 21c of the journal bearing 21 are in any circumferential positional relationship, the lubricant can be reliably supplied from the oil supply holes 15b to the oil supply holes 21c by the oil supply groove 15c.

[Second Embodiment]

Next, an exhaust turbine turbocharger of the second embodiment of the present invention will be described. The present embodiment is a modified example of the first embodiment and is the same as the first embodiment except for features described in particular below, and some description thereof will be omitted below. The exhaust turbine turbocharger of the present embodiment is the same as the exhaust turbine turbocharger of the first embodiment except for the journal bearing structure.

In the journal bearing structure 100 of the first embodiment, the oil supply groove 15c extending in the circumferential direction about the axis line X is provided in the inner circumferential surface 15a of the bearing housing 15C. In contrast, in a journal bearing structure 100A of the present embodiment, an oil supply groove 21e is provided in the outer circumferential surface 21b of the journal bearing 21.

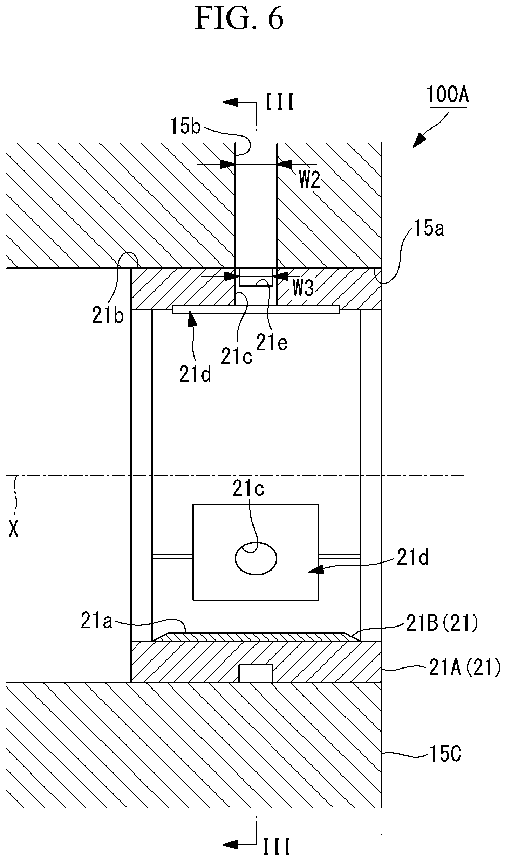

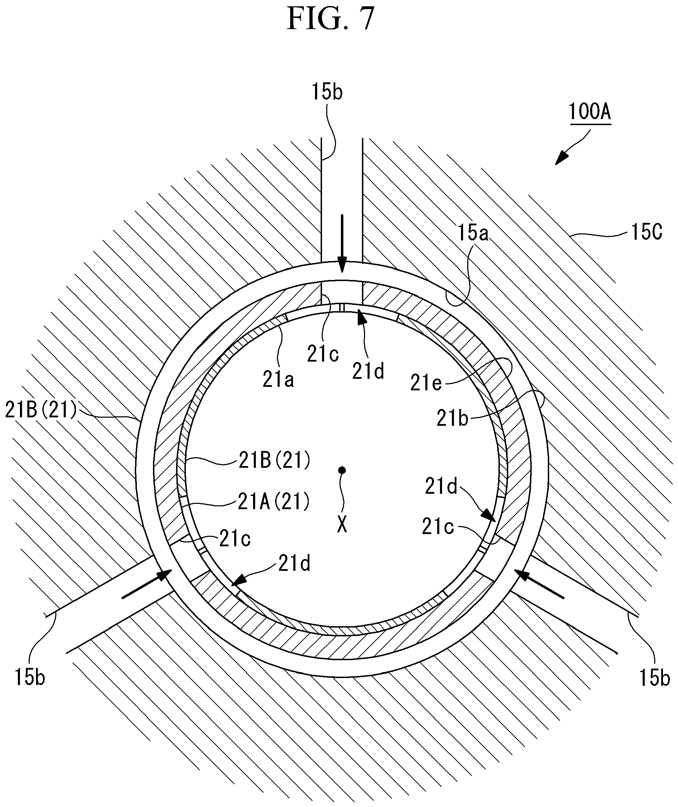

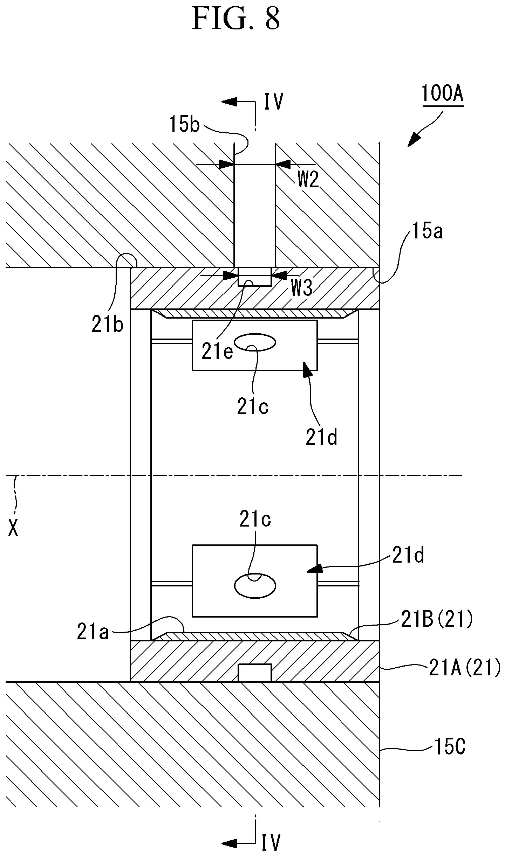

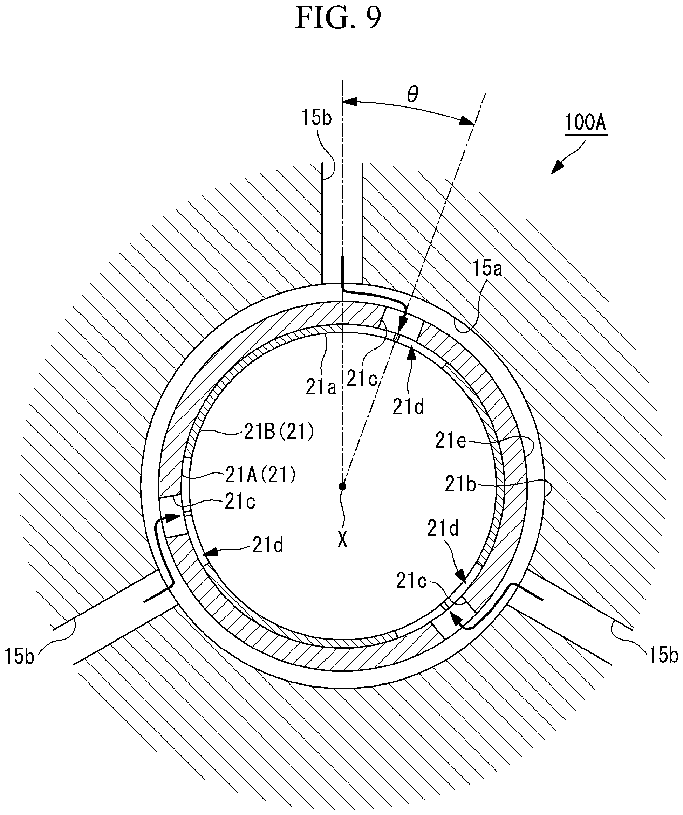

Fig. 6 and Fig. 8 are partial enlarged views of the part A illustrated in Fig. 1 and illustrate the journal bearing structure 100A of the present embodiment. Fig. 7 is a sectional view of the journal bearing structure 100A illustrated in Fig. 6 taken in the direction of the arrow III-III. Fig. 9 is a sectional view of the journal bearing structure 100A illustrated in Fig. 8 taken in the direction of the arrow IV-IV. In Fig. 6 to Fig. 9, while the axis line X is the center axis of the rotary shaft 14 illustrated in Fig. 1, illustration of the rotary shaft 14 is omitted. The journal bearing structure 100A illustrated in Fig. 6 and Fig. 7 will be mainly described below, and description of components having the same reference in the journal bearing structure 100A illustrated in Fig. 8 and Fig. 9 will be omitted.

The journal bearing structure 100A illustrated in Fig. 6 and Fig. 7 is in a state where the circumferential positions of each oil supply hole 21c of the journal bearing 21 and each oil supply hole 15b of the bearing housing 15C match each other. On the other hand, the journal bearing structure 100A illustrated in Fig. 8 and Fig. 9 is in a state where the circumferential positions of each oil supply hole 21c of the journal bearing 21 and each oil supply hole 15b of the bearing housing 15C are different from each other.

The journal bearing structure 100A illustrated in Fig. 6 and Fig. 7 corresponds to an initial state after manufacturing. The journal bearing structure 100A illustrated in Fig. 8 and Fig. 9 corresponds to a state after the rotary shaft 14 and the journal bearing 21 have been seized due to use and thereby the state of the journal bearing 21 pressed into the bearing housing 15C has been at least temporarily released.

The journal bearing 21 has an oil supply groove 21e. The oil supply groove 21e is a groove extending in the circumferential direction about the axis line X, formed circumferentially in the whole circumference, and having a depth in the radial direction. The oil supply groove 21e is formed in the outer circumferential surface 21b of the journal bearing 21 and recessed in a direction approaching the axis line X. The oil supply groove 21e guides the lubricant discharged from the oil supply holes 15b to the oil supply holes 21c of the journal bearing 21.

As illustrated in Fig. 6, the width W3 in the axis line X direction of the oil supply groove 21e is substantially the same as the width W2 in the axis line X direction of the oil supply hole 15b. The oil supply hole 15b and the oil supply hole 21c have the same width W2, respectively. Since the oil supply hole 15b is a circular hole in sectional view, the width W2 in the axis line X direction of the oil supply hole 15b matches the diameter of the oil supply hole 15b. According to the invention, the width W3 and the width W2 have a relationship as expressed by Equation (2) below:

$$W3 \leq W2 \quad (2)$$

The reason why the width W3 of the oil supply groove 21e is smaller than or equal to the width W2 of the oil supply hole 15b is to ensure a sufficient contact area between the bearing housing 15C and the journal bearing 21 and reliably maintain the state where the journal bearing 21 is pressed into and thereby fixed to the bearing housing 15C.

The journal bearing structure 100A illustrated in Fig. 6 and Fig. 7 is in a state where the circumferential positions of the oil supply hole 21c of the journal bearing 21 and the oil supply hole 15b of the bearing housing 15C match each other. The journal bearing structure 100A illustrated in Fig. 6 and Fig. 7 corresponds to the initial state after manufacturing. As illustrated by the arrow in Fig. 7, the lubricant guided from the oil supply holes 15b to the oil supply groove 21e mainly flows radially into the oil supply holes 21c while partially flowing circumferentially along the oil supply groove 21e. This is because the oil supply hole 21c is arranged on the extension line in the inflow direction of the lubricant flowing from the oil supply hole 15b into the oil supply groove 21e and the opening area of the oil supply hole 21c is larger than the opening area of the oil supply groove 21e.

On the other hand, the journal bearing structure 100A illustrated in Fig. 8 and Fig. 9 is in a state where the circumferential positions of the oil supply hole 21c of the journal bearing 21 and the oil supply hole 15b of the bearing housing 15C are different from each other. The journal bearing structure 100A illustrated in Fig. 8 and Fig. 9 corresponds to a state after the rotary shaft 14 and the journal bearing 21 have been seized due to use and thereby the state of the journal bearing 21 pressed into the bearing housing 15C has been at least temporarily released.

As illustrated in Fig. 9, the circumferential positions of the oil supply hole 21c of the journal bearing 21 and the oil supply hole 15b of the bearing housing 15C are positions different from each other by an angle θ about the axis line X. As illustrated in the arrow in Fig. 9, the lubricant guided from the oil supply holes 15b to the oil supply groove 21e flows circumferentially along the oil supply groove 21e and then flows radially into the oil supply holes 21c.

Without the oil supply groove 21e provided in the state illustrated in Fig. 8 and Fig. 9, the end on the inner circumference side of the oil supply hole 15b would be closed by the outer circumferential surface 21b of the journal bearing 21. This would result in a state where no lubricant is supplied from the oil supply holes 15b of the bearing housing 15C to the oil supply holes 21c of the journal bearing 21. To address this, in the journal bearing 21 of the present embodiment provided with the oil supply groove 21e, even when the circumferential positions of the oil supply hole 21c of the journal bearing 21 and the oil supply hole 15b of the bearing housing 15C are different from each other, the lubricant can be supplied from the oil supply holes 15b to the oil supply holes 21c.

According to the journal bearing structure 100A of the present embodiment described above, the oil supply groove 21e is formed in the outer circumferential surface 21b of the journal bearing 21. Thus, even when a state where the journal bearing 21 is held by the bearing housing 15C is released and the circumferential positions of the oil supply hole 15b and the oil supply hole 21c differ from each other, a state where a lubricant discharged from the oil supply hole 15b is guided to the oil supply hole 21c is maintained. It is therefore possible to provide the journal bearing structure 100A that can supply the lubricant to a gap between the journal bearing 21 and the rotary shaft 14 even in a state where the circumferential positions of the oil supply hole 21c of the journal bearing 21 and the oil supply hole 15b of the bearing housing 15C are different from each other.

The oil supply groove 21e of the present embodiment is formed in the outer circumferential surface 21b of the journal bearing 21 and is not formed in the inner circumferential surface 15a of the bearing housing 15C as with the first embodiment. The journal bearing 21 is a smaller member than the bearing housing 15C. Thus, processing to form the oil supply groove 21e in the outer circumferential surface 21b of the journal bearing 21 is easier than processing to form the oil supply groove 15c in the inner circumferential surface 15a of the bearing housing 15C. According to the present embodiment, it is possible to easily perform the processing to form the oil supply groove.

In the journal bearing structure 100A of the present embodiment, the width W3 in the axis line X direction of the oil supply groove 21e is substantially the same as the width W2 in the axis line X direction of the oil supply hole 15b. If the width W3 in the axis line X direction of the oil supply groove 21e is excessively wider than the width W2 in the axis line X direction of the oil supply hole 15b, a region where the inner circumferential surface 15a of the bearing housing 15C holds the outer circumferential surface 21b of the journal bearing 21 will decrease, and the force to hold the journal bearing 21 by the bearing housing 15C will decrease.

Further, if the width W3 in the axis line X direction of the oil supply groove 21e is excessively narrower than the width W2 in the axis line X direction of the oil supply hole 15b, smooth supply of the lubricant from the oil supply hole 15b to the oil supply groove 21e will not be performed. In the journal bearing structure 100A of the present embodiment, since the widths in the axis line X direction of the oil supply groove 21e and the oil supply hole 15b are substantially the same, the failure described above can be suppressed.

In the journal bearing structure 100A of the present embodiment, the oil supply groove 21e is formed in the whole circumference in the circumferential direction about the axis line X. Since the oil supply groove 21e is formed in the whole circumference in the circumferential direction, even when the circumferential positions of the oil supply hole 15b of the bearing housing 15C and the oil supply hole 21c of the journal bearing 21 are in any circumferential positional relationship, the lubricant can be reliably supplied from the oil supply holes 15b to the oil supply holes 21c by the oil supply groove 21e.

[Other Embodiments]

Although each of the oil supply groove 15c and the oil supply groove 21e is provided in the whole circumference about the axis line X in the above description, other forms may be employed. For example, each of the oil supply groove 15c and the oil supply groove 21e may be provided in a part of the region in the circumferential direction about the axis line X (for example, a region of half the circumference).

Further, although the oil supply groove is provided in either one of the inner circumferential surface 15a of the bearing housing 15C and the outer circumferential surface 21b of the journal bearing 21 in the above description, other forms may be employed. For example, the oil supply groove may be provided in both of the inner circumferential surface 15a of the bearing housing 15C and the outer circumferential surface 21b of the journal bearing 21. With the oil supply grooves being provided to both the circumferential surfaces, a sufficient volume of lubricant flowing through the oil supply grooves can be ensured. The oil supply groove is provided in at least one of the inner circumferential surface 15a of the bearing housing 15C and the outer circumferential surface 21b of the journal bearing 21.

In the journal bearing structure 100 described above, if the rotary shaft 14 and the journal bearing 21 have been seized due to use and thereby the state of the journal bearing 21 pressed into the bearing housing 15C has been at least temporarily released, the circumferential position at which the oil supply hole 21c is arranged and the circumferential position at which the oil supply hole 15b is arranged differ from each other.

In this regard, as another form, the circumferential position at which the oil supply hole 21c is arranged and the circumferential position at which the oil supply hole 15b is arranged may be different from the time of manufacturing of the journal bearing structure 100. In such a case, for example, since it is not necessary to match the circumferential positions of the oil supply hole 21c and the oil supply hole 15b to each other when attaching the journal bearing 21 to the bearing housing 15C, this facilitates attachment operation.

Further, the number of oil supply holes 15b provided in the bearing housing 15C may be less than the number of oil supply holes 21c provided in the journal bearing 21. For example, the number of oil supply holes 21c provided in the journal bearing 21 may be three, and the number of oil supply holes 15b provided in the bearing housing 15C may be one. Since the lubricant is supplied via the oil supply groove 15c even when the number of oil supply holes 15b provided in the bearing housing 15C is less than the number of oil supply holes 21c provided in the journal bearing 21, the oil supply system that supplies the lubricant to the bearing housing 15C can be simplified.

{Reference Signs List}

| | |
|---|---|
| 11 | exhaust turbine turbocharger |
| 15C | bearing housing |
| 15a | inner circumferential surface |
| 15b | oil supply hole |
| 15c | oil supply groove |
| 21 | journal bearing |

21A          back metal
21B          bearing metal
21a          inner circumferential surface
21b          outer circumferential surface
21c          oil supply hole
21d          recess
21e          oil supply groove
22           journal bearing
100, 100A    journal bearing structure
X            axis line

**Claims**

1.  A journal bearing structure (100) comprising:

    a journal bearing (21,22) that has a first inner circumferential surface (21a) and a first outer circumferential surface (21b) that are formed in a cylindrical shape extending in an axis line (X) for supporting a rotary shaft (14) by the first inner circumferential surface (21a); and
    a bearing housing (15C) that has a second inner circumferential surface (15a) formed in a cylindrical shape extending in the axis line (X) and holds the first outer circumferential surface (21b) of the journal bearing (21,22) by the second inner circumferential surface (15a),
    wherein the journal bearing (21,22) has a first oil supply hole (21c) through which the first inner circumferential surface (21a) and the first outer circumferential surface (21b) communicate with each other,
    wherein the bearing housing (15C) has a second oil supply hole (15b) opened to the second inner circumferential surface (15a), and
    wherein an oil supply groove (15c) extending in a circumferential direction about the axis line (X) and configured to guide a lubricant discharged from the second oil supply hole (15b) to the first oil supply hole (21c) is formed in at least one of the second inner circumferential surface (15a) of the bearing housing (15C) and the first outer circumferential surface (21b) of the journal bearing (21,22),
    wherein the journal bearing (21, 22) is pressed into the bearing housing (15C) and thereby attached to the bearing housing (15C), **characterized in that**
    a width in the axis line direction of the oil supply groove (15c) is smaller than or equal to a width in the axis line direction of the second oil supply hole (15b).

2.  The journal bearing structure (100) according to claim 1, wherein the oil supply groove (15c) is formed in the second inner circumferential surface (15a) of the bearing housing (15C).

3.  The journal bearing structure (100) according to claim 1, wherein the oil supply groove (15c) is formed in the first outer circumferential surface (21b) of the journal bearing (21,22).

4.  The journal bearing structure (100) according to any one of claim 1 to claim 3, wherein the oil supply groove (15c) is formed in the whole circumference in the circumferential direction about the axis line (X).

5.  The journal bearing structure (100) according to any one of claim 1 to claim 3, wherein a first position in the circumferential direction at which the first oil supply hole (21c) is arranged and a second position in the circumferential direction at which the second oil supply hole (15b) is arranged are positions different from each other.

6.  A supercharger (11) comprising:

    the journal bearing structure (100) according to any one of claim 1 to claim 3;
    a rotary shaft (14) supported by the journal bearing structure (100); and
    a compressor (13) connected to the rotary shaft (14).

**Patentansprüche**

1.  Gleitlagerstruktur (100), umfassend:

    ein Gleitlager (21, 22), das eine erste innere Umfangsfläche (21a) und eine erste äußere Umfangsfläche (21b) aufweist, die in einer zylindrischen Form ausgebildet sind, die sich in einer Achsenlinie (X) erstreckt, um eine Drehwelle (14) durch die erste innere Umfangsfläche (21a) zu stützen; und
    ein Lagergehäuse (15C), das eine zweite innere Umfangsfläche (15a) aufweist, die in einer zylindrischen Form ausgebildet ist, die sich in der Achsenlinie (X) erstreckt, und die erste äußere Umfangsfläche (21b) des Gleitlagers (21, 22) durch die zweite innere Umfangsfläche (15a) hält,
    wobei das Gleitlager (21, 22) eine erste Ölzufuhröffnung (21c) aufweist, durch die die erste innere Umfangsfläche (21a) und die erste äußere Umfangsfläche (21b) miteinander kommunizieren,
    wobei das Lagergehäuse (15C) eine zweite Ölzufuhröffnung (15b) aufweist, die zur zweiten inneren Umfangsfläche (15a) hin geöffnet ist, und
    wobei eine Ölzuführnut (15c), die sich in einer Umfangsrichtung um die Achsenlinie (X) erstreckt und konfiguriert ist, um ein von der zweiten Ölzufuhröffnung (15b) abgegebenes Schmiermittel zu der ersten Ölzufuhröffnung (21c) zu führen, in mindestens einem aus der zweiten inneren Umfangsfläche (15a) des Lagergehäuses (15C) und der ersten äußeren Umfangsfläche (21b) des Gleitlagers (21, 22) ausgebildet ist,

wobei

das Gleitlager (21, 22) in das Lagergehäuse (15C) gepresst und dadurch an dem Lagergehäuse (15C) befestigt ist, **dadurch gekennzeichnet, dass**

eine Breite in der Achsenlinienrichtung der Ölzufuhrnut (15c) kleiner oder gleich einer Breite in der Achsenlinienrichtung der zweiten Ölzufuhröffnung (15b) ist.

2. Gleitlagerstruktur (100) nach Anspruch 1, wobei die Ölzufuhrnut (15c) in der zweiten inneren Umfangsfläche (15a) des Lagergehäuses (15C) ausgebildet ist.

3. Gleitlagerstruktur (100) nach Anspruch 1, wobei die Ölzufuhrnut (15c) in der ersten äußeren Umfangsfläche (21b) des Gleitlagers (21, 22) ausgebildet ist.

4. Gleitlagerstruktur (100) nach einem der Ansprüche 1 bis 3, wobei die Ölzufuhrnut (15c) über den gesamten Umfang in Umfangsrichtung um die Achsenlinie (X) ausgebildet ist.

5. Gleitlagerstruktur (100) nach einem der Ansprüche 1 bis 3, wobei eine erste Position in der Umfangsrichtung, an der die erste Ölzufuhröffnung (21c) angeordnet ist, und eine zweite Position in der Umfangsrichtung, an der die zweite Ölzufuhröffnung (15b) angeordnet ist, voneinander verschiedene Positionen sind.

6. Turbolader (11), umfassend:

die Gleitlagerstruktur (100) nach einem der Ansprüche 1 bis 3;
eine Drehwelle (14), die von der Gleitlagerstruktur (100) getragen wird; und
einen Verdichter (13), der mit der Drehwelle (14) verbunden ist.

**Revendications**

1. Structure de palier lisse (100) comprenant :

un palier lisse (21, 22) qui présente une première surface circonférentielle interne (21a) et une première surface circonférentielle externe (21b) qui sont formées en une forme cylindrique s'étendant sur une ligne d'axe (X) pour soutenir un arbre rotatif (14) par la première surface circonférentielle interne (21a) ; et
un logement (15C) de palier qui présente une seconde surface circonférentielle interne (15a) formée en une forme cylindrique s'étendant sur la ligne d'axe (X) et recevant la première surface circonférentielle externe (21b) du palier lisse (21, 22) par la seconde surface circonférentielle interne (15a),
dans lequel le palier lisse (21, 22) présente un premier trou d'alimentation (21c) en huile au travers duquel la première surface circonférentielle interne (21a) et la première surface circonférentielle externe (21b) communiquent l'une avec l'autre,
dans lequel le logement (15C) palier présente un second trou d'alimentation (15b) en huile ouvert vers la seconde surface circonférentielle interne (15a), et
dans lequel une rainure d'alimentation (15c) en huile s'étendant dans une direction circonférentielle sur la ligne d'axe (X) et configurée pour guider un lubrifiant évacué depuis le second trou d'alimentation (15b) en huile vers le premier trou d'alimentation (21c) en huile est formé dans au moins l'une de la seconde surface circonférentielle interne (15a) du logement (15C) de palier et de la première surface circonférentielle externe (21b) du palier lisse (21, 22),
dans lequel
le palier lisse (21, 22) est pressé dans le logement (15C) de palier et par là attaché au logement (15C) de palier, **caractérisé en ce que** une largeur dans la direction de la ligne d'axe de la rainure d'alimentation (15c) en huile est plus petite que ou égale à une largeur dans la direction de la ligne d'axe du second trou d'alimentation (15b) en huile.

2. Structure (100) de palier selon la revendication 1, dans laquelle la rainure d'alimentation (15c) en huile est formée dans la seconde surface circonférentielle interne (15a) du logement (15C) de palier.

3. Structure (100) de palier selon la revendication 1, dans laquelle la rainure d'alimentation (15c) en huile est formée dans la première surface circonférentielle externe (21b) du palier lisse (21, 22).

4. Structure (100) de palier lisse selon l'une quelconque de la revendication 1 à la revendication 3, dans laquelle la rainure d'alimentation (15c) en huile est formée dans la circonférence entière dans la direction circonférentielle sur la ligne d'axe (X).

5. Structure (100) de palier lisse selon l'une quelconque de la revendication 1 à la revendication 3, dans laquelle une première position dans la direction circonférentielle en laquelle le premier trou d'alimentation (21c) en huile est disposé et une seconde position dans la direction circonférentielle en laquelle le second trou d'alimentation (15b) en huile est disposé sont des positions différentes l'une de l'autre.

6. Compresseur de suralimentation (11) comprenant :

la structure (100) de palier lisse selon l'une quelconque de la revendication 1 à la revendication 3,
un arbre rotatif (14) soutenu par la structure (100) de palier lisse ; et
un compresseur (13) connecté à l'arbre rotatif (14).

FIG. 1

EP 3 913 200 B1

# FIG. 2

# FIG. 3

# FIG. 4

# FIG. 5

# FIG. 6

## FIG. 7

# FIG. 8

# FIG. 9

**EP 3 913 200 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2018145942 A
- WO 2018092781 A1
- JP 2010116944 A
- JP 2001140888 A
- JP 2013177900 A
- US 2017045084 A1